# EUROPÄISCHE PATENTSCHRIFT

(11) **EP 2 156 745 B1**
(45) Veröffentlichungstag und Bekanntmachung des Hinweises auf die Patenterteilung: **05.09.2012**
(21) Anmeldenummer: 09009134.9
(22) Anmeldetag: 14.07.2009
(51) Int. Cl.: A23F 3/16, C12C 3/10, B01D 11/02, F16J 12/00

(54) **Druckbehälteranordnung umfassend einen äusseren Druckbehälter und mindestens einen Einsatzkorb**
Pressure container assembly covering an external pressure container and at least one insert basket
Agencement de récipient sous pression comprenant un récipient sous pression extérieur et au moins un panier d'insertion

(30) Priorität: 21.08.2008 DE 102008039106
(43) Veröffentlichungstag der Anmeldung: 24.02.2010
(73) Patentinhaber: NATECO2 GmbH & Co. KG, 85283 Wolnzach (DE)
(72) Erfinder: Schulmeyr, Josef, 85283 Wolnzach (DE); Geyer, Stefan, 85283 Wolnzach (DE); Gehrig, Manfred, Dr., 85283 Wolnzach (DE)
(74) Vertreter: Hübner, Gerd

(56) Entgegenhaltungen:
- EP-A1- 1 792 542
- EP-A2- 0 061 877
- US-A- 5 355 901
- US-A- 5 377 705

## Beschreibung

Die Erfindung betrifft eine Druckbehälteranordnung, die einen äußeren Druckbehälter und mindestens einen Einsatzkorb darin zur Aufnahme eines zu behandelnden Gutes aufweist. Letzteres ist mit einem in den Druckbehälter und Einsatzkorb einbringbaren Druckfluid beaufschlagbar.

Zum Hintergrund der Erfindung ist darauf hinzuweisen, dass diese in erster Linie bei der Behandlung von Feststoffen mit Flüssigkeiten und/oder Gasen von Relevanz ist. Das zu behandelnde Gut wird dabei in einen Druckbehälter eingefüllt, der den zur Behandlung notwendigen Drücken und Temperaturen Stand halten muss.

'Behandlung' bedeutet in diesem Zusammenhang Trenn- bzw. Reinigungsverfahren mechanischer oder thermischer Art. Beispiele hierfür sind Filterung, Auswaschen, Extraktion oder Adsorption.

Die zu behandelnden Feststoffe können direkt auf geeignete Weise in die Behälter eingefüllt und nach Beendigung des Vorganges aus diesen entnommen werden. Der Befüll- und Entleervorgang gestaltet sich einfach, sofern der Feststoff vor und nach der Behandlung fließfähig ist.

Zur schnellen Befüllung bzw. Entleerung wurde eine Vielzahl von Verschlüssen, u. a. auch sog. Schnellverschlüsse entwickelt. Im Bereich der Hochdruckverfahrenstechnik hat sich bei kleineren Durchmessern der Behälter der sog. Klammerschnellverschluss durchgesetzt. Bei größeren Durchmessern würden die Klammern zu schwer werden, deshalb gibt es andere Konstruktionen, z. B. den ,Brettschneider'-Verschluss.

Es ist auch üblich, insbesondere bei kleineren Behältern, Einsatzkörbe zu verwenden. Deren Vorteile müssen den Herstellkosten jeweils gegenüber gestellt werden:

Befüllung und Entleerung können außerhalb des Druckbehälters vorgenommen werden. Es sind insbesondere Vorteile bei Verwendung von explosionsgefährlichen Stäuben und Dämpfen ersichtlich. Ein ähnliches Argument trifft bei der Verarbeitung von Feststoffen unter erhöhten Anforderungen an hygienische Bedingungen zu. Diese Beschränkungen in der Betriebsweise können dazu führen, dass Körbe zwingend verwendet werden müssen.

Ein rein wirtschaftlicher Vorteil besteht darin, dass eine Vielzahl von Einsatzkörben zu geeigneten Zeiten vorbereitet werden können und dann z. B. in der evtl. schwächer besetzten Nachtschicht nur noch ausgewechselt werden müssen.

Die Durchströmung des in den Einsatzkörben vorgelegten Feststoffes kann (axial) in Behälterlängsrichtung von unten nach oben oder umgekehrt, aber auch von außen nach innen bzw. umgekehrt (radial) erfolgen. Letztere Fahrweise ist besonders vorteilhaft, wenn langsame Strömungsgeschwindigkeiten erwünscht sind, wie beispielsweise bei der Adsorption.

Im Folgenden wird in weiterer Spezifizierung unter 'Behandlung' die Extraktion von Feststoffen mit flüssigen oder überkritischen Gasen verstanden. Vorzugsweise wird Kohlendioxid verwendet. Die Erfindung ist jedoch keineswegs auf diese Anwendung beschränkt.

Der typische Ablauf der Extraktion wird am Beispiel von Hopfen beschrieben:

Hopfendolden werden vor der Extraktion von Schwergut gereinigt, grob vermahlen und pelletiert. Nach der Abkühlung werden Pellets verwogen und in flexible Container eingehüllt. Diese Container werden zur jeweiligen Extraktionsanlage befördert, die Pellets werden direkt in den Druckbehälter eingefüllt, können aber auch in Einsatzkörbe gefüllt werden.

Die Extraktion läuft in allen Anlagen gleich ab: Bei hohem Druck durchströmt das Lösemittel Kohlendioxid die Schüttung der Hopfenpellets und belädt sich mit den wertgebenden Bestandteilen der Hopfendolden. In der nachfolgenden Abscheidestufe werden bei niedrigem Druck die zuvor gelösten Bestandteile vom Lösemittel abgetrennt und aus dem Druckbehälter ausgeschleust. Die Extraktion der Pellets erfolgt chargenweise, weil zur Entleerung und Befüllung mit Pellets der jeweilige Behälter auf Atmosphärendruck entspannt werden muss.

Eine besondere Problematik ergibt sich im Zusammenhang mit den Behälterverschlüssen und Einsatzkörben bei der Entspannung des Druckbehälters auf Atmosphärendruck. So sind die Druckbehälter (Extraktions- und Abscheidebehälter) mit Schnellverschlüssen ausgerüstet. Hierbei hält eine zweigeteilte Klammer den Behälterdeckel am Behälter. Eine Dichtung verhindert das Austreten von Gas. Zur Öffnung des Deckels müssen zuerst die beiden Klammerhälften auseinander bewegt werden. Anschließend kann der Deckel mit hydraulischer oder pneumatischer Hilfe angehoben und dann zur Seite geschoben werden.

Die Klammern können nur entfernt werden, wenn Druckmesseinrichtungen oben und unten am Behälter den drucklosen Zustand des Behälters anzeigen. Dann muss erst noch ein Ventil ('Schnüffelventil') geöffnet werden, welches evtl. noch vorhandenes Gas ins Freie entlässt. Dieser Vorgang muss vom Bediener beobachtet werden. Der hörbare oder z.B. über ein Aufblasen eines Balges sichtbare Gasaustritt gibt die Gewähr, dass die Leitung nicht verstopft ist. Dieses Ventil muss einige Zeit offen sein, bevor dann der Klammerverschluss entriegelt werden kann.

Ein Einsatzkorb besteht aus einem Rohr mit Flanschen oben und unten, in die Siebe und Stützplatten eingeklemmt sind. Außen befindet sich eine Dichtung, die den Korb zum Extrakteur abdichtet, damit das Lösemittel CO₂ durch den Korb und nicht zwischen Korb und Extrakteur am Extraktionsgut vorbei strömt. Es handelt sich bei dem Einsatzkorb nicht um einen prüfpflichtigen Druckbehälter.

Bei Verwendung von Körben können sich Sicherheitsprobleme ergeben, sofern sich die Siebplatten zulegen. Dann ist das Innenvolumen des Korbes vom umgebenden Volumen im Behälter abgekoppelt und - wie oben beschrieben - wird nur die Druckmessung im Volumen des Behälters als Kriterium für die Abwesenheit eines Innendruckes ausgewertet. Es kann also vorkommen, dass bei verstopften Siebplatten nur der Behälterdruck abgebaut wird und dann versucht wird, den Schnellverschluss zu öffnen.

Sofern es gelingt, die Klammern und den Deckel zu öffnen, verbleibt ein unbekannter Innendruck im Einsatzkorb. Der Einsatzkorb wirkt dann als vorgespannter Druckbehälter. Eine Druckentlastung kann erfolgen, nachdem die Flansche des Einsatzkorbes gelöst werden. Sofern es sich um geschraubte Flansche handelt, kann evtl. der Druck gezielt abgelassen werden. Es bleibt aber immer ein Überraschungsmoment, da das Vorhandensein des Druckes nicht bemerkt worden sein muss.

Sofern sich der Druck aber über eine Schwachstelle im Korb entlastet, können schlimmste Gefahren entstehen. Sollte z. B. der untere Bodenflansch noch im Behälter abreißen, kann der Korb raketengleich reagieren. Er verhält sich ähnlich wie beim Abreißen eines Ventils an einer unter Druck stehenden Gasflasche.

Ähnliche Folgen sind zu befürchten, sofern der Korb bereits herausgezogen wird und dabei platzt.

Dieses Gefahrenmoment lässt sich vermeiden, wenn dafür gesorgt wird, dass die Siebe nicht verstopfen. Dann ist der Innendruck im Einsatzkorb immer gleich dem Behälterdruck. Dies kann dadurch gewährleistet werden, dass keine pastösen Stoffe in die Einsatzkörbe vorgelegt werden. In der langjährigen Praxis haben sich noch keine Verstopfungen von Siebplatten bei Vorlegen von stückigen oder pulvrigen Materialien ergeben, insbesondere wenn die Maschenweite der Siebplatten groß genug gewählt wurde.

Es kann sich jedoch die Forderung ergeben, sehr feine Filter anstelle der Siebplatten zu verwenden, damit ein Mitreißen von Trub verhindert wird. Auch kann es erwünscht sein, sich im Zuge von Neuentwicklungen mit der Extraktion von pastösen Materialien zu befassen.

Dann sind Maßnahmen vorzusehen, welche bei Differenzdruck zwischen Einsatzkorb und Behälter die oben diskutierten Risiken ausschließen. So könnten Sollberststellen an den Einsatzkörben angebracht werden, wie beispielsweise Sicherheitsventile und Berstscheiben. Solche Einrichtungen müssen jedoch auch praxistauglich sein, d. h. nicht zu früh öffnen. Sie dürfen also nicht den Erfolg der Extraktion infrage stellen. Die Folge wäre, dass die gewünschten Drücke so hoch sind, dass trotzdem eine Gefährdung durch einen Innendruck bestehen bleibt. Ein größer Unsicherheitsfaktor besteht auch darin, dass die genannten Einrichtungen verkleben können. Eine Sicherheit wäre dann nur vorgetäuscht.

Aus der US 5 355 901 A ist eine Druckbehälteranordnung in Form einer Vorrichtung zur Feinreinigung mithilfe von überkritischem Kohlendioxid bekannt, die einen äußeren Druckbehälter, einen Einsatzkorb zur Aufnahme des Reinigungsgutes und dessen Beaufschlagung mit Reinigungsflüssigkeit aufweist. Dabei sind geeignete Druck-Kontrolleinrichtungen über das System verteilt. Diese Kontrolleleinrichtungen sind im Zusammenhang mit der oben geschilderten Problematik allerdings nicht hilfreich.

Ausgehend von der geschilderten Sicherheitsproblematik liegt der Erfindung die Aufgabe zugrunde, eine Druckbehälteranordnung so zu verbessern, dass eine Druckentlastung im Einsatzkorb vor Öffnung des Druckbehälters zuverlässig gewährleistet ist.

Diese Aufgabe wird durch die Merkmale des Kennzeichens des Patentanspruches 1 gelöst.

Für die Kontrolleinrichtung sind gemäß bevorzugten Ausführungsformen unterschiedliche konstruktive Ansätze möglich. So kann grundsätzlich als Kontrolleinrichtung für den Innendruck eine Druckausgleichsleitung vorgesehen sein, die den Einsatzkorb mit der Umgebung der Druckbehälteranordnung über den Druckbehälter hinweg verbindet und entsprechend schaltbar ist, um ein druckdichtes Schließen im Betrieb sowie einen sicheren Ablass des Innendruckes des Einsatzkorbes vor dem Öffnen der Druckbehälteranordnung zu gewährleisten.

Eine einfachere Alternative besteht in der Auslegung der Kontrolleinrichtung als Druckausgleichsleitung, die lediglich zwischen dem Innenraum des Einsatzkorbes und dem ihn umgebenden Druckbehälter angelegt ist. In diesem Falle wird ebenfalls ein gefährlicher Innendruck im Einsatzkorb dann auszuschließen sein, wenn vor dem Öffnen der Druckbehälteranordnung der eigentliche Druckbehälter mit den eingangs erörterten Sicherheitsmaßnahmen als drucklos erkannt wird.

Als weitere Alternative oder zusätzliche Maßnahme zur Kontrolle des im Einsatzkorb herrschenden Innendruckes ist es möglich, diesen durch eine entsprechende Druckmesseinrichtung zu erfassen und den herrschenden Innendruck außerhalb der Druckbehälteranordnung in üblicher Weise zu visualisieren. Damit kann eine gefährliche Druckdifferenz zwischen Einsatzkorb und Druckbehälter extern erkannt werden.

Um eine hohe Betriebssicherheit der Druckausgleichsleitung zwischen dem Einsatzkorb und der Umgebung der Druckbehälteranordnung zu gewährleisten, ist es gemäß einer weiteren bevorzugten Ausführungsform vorgesehen, den Behälterdeckel und den Korbdeckel zur gemeinsamen Montage und Demontage bei der Behälterbeschickung fest miteinander zu verbinden. Dadurch wird die Problematik vermieden, dass bei Verschließen des Einsatzkorbes mit einem separaten Korbdeckel und anschließendem Verbinden der Druckausgleichsleitung nicht sicher nachprüfbar ist, ob diese Leitung auch nach dem Schließen des Behälterdeckels noch intakt ist. Es läge also lediglich eine Scheinsicherheit vor. Gemäß der bevorzugten Ausführungsform wird dieses Problem durch das gemeinsame Montageteil aus Behälterdeckel und Korbdeckel mit einer dauerhaft durchgeführten Druckausgleichsleitung gelöst.

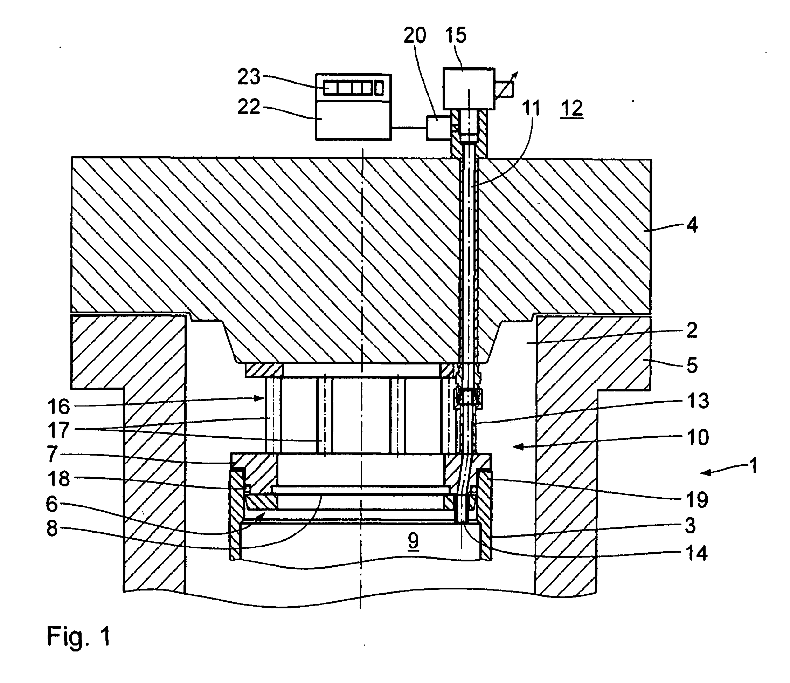

Weitere Merkmale, Einzelheiten und Vorteile der Erfindung sind der nachfolgenden Beschreibung entnehmbar, in der ein Ausführungsbeispiel des Erfindungsgegenstandes anhand der beigefügten Zeichnung näher erläutert wird. Diese
- Fig. 1: zeigt einen ausschnittsweisen Schnitt einer Druckbehälteranord- nung im Bereich eines Behälterdeckels.

Die Zeichnung zeigt einen als Ganzes mit 1 bezeichneten Druckbehälter, der über eine Beschickungsöffnung 2 mit einem nur mit seinem oberen Kragen dargestellten Einsatzkorb 3 bestückbar ist. In diesem Einsatzkorb 3 können beispielsweise Hopfendolden untergebracht sein, die mittels überkritischem Kohlendioxid in einem üblichen Extraktionsvorgang extrahiert werden.

Die Beschickungsöffnung 2 ist mit einem Behälterdeckel 4 druckdicht zu verschließen. Dazu ist ein Flansch 5 um die Beschickungsöffnung 2 des Druckbehälters 1 vorgesehen, an dem mittels nicht näher gezeigter Schnellverschlussklammern der Behälterdeckel 4 druckfest angeflanscht wird.

Der Einsatzkorb 3 ist mit einem Korbdeckel 6 verschlossen, der einen ringförmigen, umlaufenden Deckelflansch 7 und ein darin eingespanntes Verschlusssieb 8 aufweist. Über dieses Verschlusssieb 8 kann durch den Einsatzkorb 3 geleitetes überkritisches Kohlendioxid austreten, das an der in der Zeichnung nicht gezeigten Fußseite des Einsatzkorbes 3 über ein entsprechendes Bodensieb eingeleitet wird.

Wie nachvollziehbar ist, kann sich bei einem Verstopfen des Verschlusssiebes 8 und des nicht gezeigten Bodensiebes im Innenraum 9 des Einsatzkorbes 3 ein Überdruck halten, auch wenn der den Einsatzkorb 3 umgebende Behälterraum 10 des Druckbehälters 1 entspannt ist. Dies ruft die eingangs ausführlich erörterten Sicherheitsprobleme hervor.

Um diese zu beheben, ist eine im Folgenden näher zu erläuternde Kontrolleinrichtung für den im Innenraum 9 des Einsatzkorbes 3 herrschenden Innendruck vorgesehen. Diese besteht bei dem in der Zeichnung gezeigten Ausführungsbeispiel in erster Linie aus einer Druckausgleichsleitung 11, die sich von der Umgebung 12 des Druckbehälters 1 durch den Behälterdeckel 4 über ein festes Verbindungsstück 13 und weiter durch den Deckelflansch 7 hindurch bis zu einer Mündungstülle 14 in den Innenraum 9 des Einsatzkorbes 3 erstreckt. Am äußeren Ende der Druckausgleichsleitung 11 ist ein Ventil 15 angeordnet, das nach dem Entspannen des Druckbehälters 1 kontrolliert geöffnet wird. Dadurch kann ein ggf. noch im Innenraum 9 des Einsatzkorbes 3 herrschender Überdruck abgelassen und der Einsatzkorb 3 nach Öffnen des Behälterdeckels 4 gefahrlos entnommen werden.

Wie aus der Zeichnung ferner deutlich wird, ist der Korbdeckel 6 über ein Brückenteil 16 mit einer Anzahl sich zum Behälterdeckel 4 hin erstreckenden Verbindungsstreben 17 fest mit dem Behälterdeckel 4 unter Einschluss der Druckausgleichsleitung 11 verbunden. Das Brückenteil 16 ist zwischen den Verbindungsstreben 17 offen für einen Durchtritt des überkritischen Kohlendioxids. Beim Beschicken des Druckbehälters 1 wird also zuerst der oben offene Einsatzkorb 3 mit einer entsprechenden Füllung an zu extrahierendem Gut in den Druckbehälter 1 eingesetzt und anschließend der Behälterdeckel 4 mit dem Korbdeckel 6 gemeinsam von oben aufgesetzt. Dabei greift der Deckelflansch 7 mit seiner umlaufenden Ringdichtung 18 in den Öffnungskragen 19 des Einsatzkorbes 3 ein und dichtet somit den Korbdeckel 6 gegen den Einsatzkorb 3 randseitig ab.

Beim Öffnen des Druckbehälters 1 nach einem Extraktionsvorgang wird der Druckbehälter 1 entlastet, das Ventil 15 geöffnet und anschließend nach Wegnahme der Schnellverschlussklammern der gesamte Behälterdeckel 4 mit Korbdeckel 6 wieder nach oben abgehoben. Erkennbar besteht zu keiner Zeit das Risiko, dass die Öffnung des Behälters bei einem unter Druck stehenden Innenraum 9 des Einsatzkorbes 3 stattfindet.

In der beigefügten Zeichnung ist ferner eine weitere Kontrolleinrichtung für den Druck im Innenraum 9 des Einsatzkorbes 3 angedeutet. Es handelt sich dabei um einen Drucksensor 20, der in die Zuleitung zum Ventil 15 über ein Zwischenstück integriert ist. Dieser Sensor misst den Druck im Innenraum 9 des Einsatzkorbes 3 mittelbar über den Druck in der Druckausgleichsleitung 11. Das Sensorsignal kann, wie die Signale aller anderen, hier nicht näher dargestellten Drucksensoren über eine Auswerteeinrichtung 22 verarbeitet und auf einer Anzeigeeinheit 23 ausgegeben werden. Wie erwähnt, kann dadurch ein gefährlicher Druckzustand im Einsatzkorb 3 erkannt werden.

Abschließend ist darauf hinzuweisen, dass statt des Ventils 15 an der Druckausgleichsleitung 11 auch ein einfacher, kontrolliert aufschraubbarer Stopfen vorgesehen sein kann. Nach dessen Abschrauben kann dann schließlich noch mittels eines Stabes oder Drahtes die Durchgängigkeit der Druckausgleichsleitung 11 mit der gebotenen Vorsicht überprüft werden. Soweit die Drahtsonde problemlos durch die gesamte Druckausgleichsleitung 11 hindurchgeschoben werden kann, kann mit hoher Sicherheit davon ausgegangen werden, dass eine Verbindung zwischen dem Innenraum 9 des Einsatzkorbes 3 und der Umgebung 12 mit entsprechendem Druckausgleich vorliegt.

Sollte im sehr unwahrscheinlichen Falle eines immer noch vorhandenen Innendruckes im Einsatzkorb 3 eine Öffnung des Behälterdeckels 4 vorgenommen werden, so ist ein Herausschießen des Einsatzkorbes nicht möglich. Es wird nämlich beim Öffnen des Behälterdeckels 4 der Korbdeckel 6 mit geöffnet, so dass der Treibstrahl eines unter Restdruck stehenden Gases im Einsatzkorb 3 diesen in den Behälter hineindrückt.

## Patentansprüche

1. Druckbehälteranordnung umfassend
- einen äußeren Druckbehälter (1) und
- mindestens einen Einsatzkorb (3) im Druckbehälter (1) zur Aufnahme eines zu behandelnden Gutes, das mit einem in den Druckbehälter (1) und Einsatzkorb (3) einbringbaren Druckfluid beaufschlagbar ist,
**dadurch gekennzeichnet dass**
- der Einsatzkorb (3) ein Rohr mit einem Flansch (7) und einem darin eingespannten Verschlusssich (8) aufweist, und
- eine Kontrolleinrichtung (11, 20) für den im Innenraum (9) des Einsatzkorbes (3) herrschenden Innendruck vorgesehen ist.

2. Druckbehälteranordnung nach Anspruch 1, **dadurch gekennzeichnet, dass** die Kontrolleinrichtung durch eine den Innenraum (9) des Einsatzkorbes (3) mit der Umgebung (12) über den Druckbehälter (1) hinweg verbindende, schaltbare Druckausgleichsleitung (11) besteht.

3. Druckbehälteranordnung nach Anspruch 2, wobei der Druckbehälter (1) mit einem Behälterdeckel (4) und der Einsatzkorb (3) mit einem Korbdeckel (6) versehen sind, **dadurch gekennzeichnet, dass** die Druckausgleichsleitung (11) durch den Behälterdeckel (4) und den Korbdeckel (6) geführt ist.

4. Druckbehälteranordnung nach Anspruch 3, **dadurch gekennzeichnet, dass** die Druckausgleichsleitung (11) durch einen ein Verschlusssieb (8) des Korbdeckels (6) haltenden Flansch (7) geführt ist.

5. Druckbehälteranordnung nach Anspruch 3 oder 4, **dadurch gekennzeichnet, dass** der Behälterdeckel (4) und der Korbdeckel (6) zur gemeinsamen Montage und Demontage bei der Behälterbeschickung fest miteinander verbunden sind.

6. Druckbehälteranordnung nach Anspruch 5, **dadurch gekennzeichnet, dass** der Korbdeckel (6) über ein offenes, einen Durchtritt von Druckfluid erlaubendes Brückenteil (16) mit dem Behälterdeckel (4) verbunden ist.

7. Druckbehälteranordnung nach einem der Ansprüche 2 bis 6, **dadurch gekennzeichnet, dass** die schaltbare Druckausgleichsleitung (11) einen Stopfen oder ein Ventil (15) als Schalteinrichtung aufweist.

8. Druckbehälteranordnung nach Anspruch 1, **dadurch gekennzeichnet, dass** die Kontrolleinrichtung durch eine den Druck im Einsatzkorb (3) erfassende Druckmesseinrichtung (20) gebildet ist.

9. Druckbehälteranordnung nach Anspruch 2 und 8, **dadurch gekennzeichnet, dass** die Druckmesseinrichtung (20) den Druck in der Druckausgleichsleitung (11) erfasst.

10. Druckbehälteranordnung nach einem der vorgenannten Ansprüche, **dadurch gekennzeichnet, dass** der Druckbehälter (1) zur Beaufschlagung des zu behandelnden Gutes mit einem unter Druck stehenden Fluid, insbesondere einem flüssigen oder überkritischen Gas ausgelegt ist.

## Claims

1. Pressure vessel arrangement comprising
- an external pressure vessel (1) and
- at least one insert basket (3) in the pressure vessel (1) for receiving a substance to be treated which is exposable to a pressure fluid which is feedable to the pressure vessel (1) and the insert basket (3),
**characterized, in that**
- the insert basket (3) comprises a tube having a flange (7) and a sealing screen (8) clamped therein, and
- a control device (11, 20) is provided for the internal pressure prevailing in the interior (9) of the insert basket (3).

2. Pressure vessel arrangement according to claim 1, **characterized in tha**t the control device consists of a switchable pressure compensation line (11) connecting the interior (9) of the insert basket (3) to the surroundings (12) beyond the pressure vessel (1).

3. Pressure vessel arrangement according to claim 2, wherein the pressure vessel (1) is provided with a vessel lid (4) and the insert basket (3) is provided with a basket lid (6), **characterized in that** the pressure compensation line (11) is passed through the vessel lid (4) and the basket lid (6).

4. Pressure vessel arrangement according to claim 3, **characterized in that** the pressure compensation line (11) is passed through a flange (7) holding a sealing screen (8) of the basket lid (6).

5. Pressure vessel arrangement according to claim 3 or 4, **characterized in that** the vessel lid (4) and the basket lid (6) are rigidly connected to each other so as to be mounted and demounted together when the vessel is loaded.

6. Pressure vessel arrangement according to claim 5, **characterized in that** the basket lid (6) is connected to the vessel lid (4) via an open bridge portion (16) allowing a passage of pressure fluid.

7. Pressure vessel arrangement according to one of claims 2 to 6, **characterized in that** the switchable pressure compensation line (11) comprises a plug or a valve (15) as switching device.

8. Pressure vessel arrangement according to claim 1, **characterized in that** the control device is formed by a pressure measuring device (20) detecting the pressure in the insert basket (3).

9. Pressure vessel arrangement according to claim 2 and 8, **characterized in that** the pressure measuring device (20) detects the pressure in the pressure compensation line (11).

10. Pressure vessel arrangement according to one of the preceding claims, **characterized in that** the pressure vessel (1) is designed such that the substance to be treated is exposable to a pressurized fluid, in particular a liquid or supercritical gas.

## Revendications

1. Agencement de récipient sous pression comprenant
- un récipient sous pression externe (1) et
- au moins un panier d'insertion (3) dans le récipient sous pression (1) pour la réception d'un produit à traiter, qui peut être alimenté avec un fluide sous pression pouvant être introduit dans le récipient sous pression (1) et le panier d'insertion (3),
**caractérisé en ce**
- **que** le panier d'insertion (3) présente une canalisation avec une bague (7) et un tamis de fermeture (8) qui y est inséré, et
- **qu'**une installation de contrôle (11, 20) est prévue pour le contrôle de la pression interne régnant dans l'espace interne (9) du panier d'insertion (3).

2. Agencement de récipient sous pression selon la revendication 1 **caractérisé en ce que** l'installation de contrôle est constituée par une canalisation d'équilibrage de la pression (11) pouvant être commutée, reliant l'espace interne (9) du panier d'insertion (3) avec l'environnement (12) au-delà du récipient sous pression (1).

3. Agencement de récipient sous pression selon la revendication 2 où le récipient sous pression (1) est muni d'un couvercle de récipient (4) et le panier d'insertion (3) est muni d'un couvercle de panier (6), **caractérisé en ce que** la canalisation d'équilibrage de la pression (11) est passée à travers le couvercle de récipient (4) et le couvercle de panier (6).

4. Agencement de récipient sous pression selon la revendication 3 **caractérisé en ce que** la canalisation d'équilibrage de la pression (11) est passée à travers une bague (7) du couvercle de panier (6) portant un tamis de fermeture (8).

5. Agencement de récipient sous pression selon les revendications 3 ou 4 **caractérisé en ce que** le couvercle du récipient (4) et le couvercle de panier (6) sont reliés solidement l'un à l'autre pour un montage et un démontage communs lors de l'alimentation du récipient.

6. Agencement de récipient sous pression selon la revendication 5 **caractérisé en ce que** le couvercle de panier (6) est relié avec le couvercle du récipient (4) par l'intermédiaire d'une partie de pontage (16), ouverte, permettant le passage du fluide sous pression.

7. Agencement de récipient sous pression selon l'une des revendications de 2 à 6 **caractérisé en ce que** le tuyau d'équilibrage de la pression (11) commutable présente un bouchon ou une vanne (15) en tant que dispositif de commutation.

8. Agencement de récipient sous pression selon la revendication 1 **caractérisé en ce que** l'installation de contrôle est formée par un dispositif de mesure de la pression (20) déterminant la pression dans le panier d'insertion (3).

9. Agencement de récipient sous pression selon les revendications 2 ou 8 **caractérisé en ce que** le dispositif de mesure de la pression (20) détermine la pression dans la canalisation d'équilibrage de la pression (11).

10. Agencement de récipient sous pression selon l'une des revendications précitées **caractérisé en ce que** le récipient sous pression (1) est conçu pour l'alimentation du produit à traiter avec un fluide mis sous pression, en particulier un gaz à l'état liquide ou supercritique.
